# EUROPÄISCHE PATENTSCHRIFT

(11) **EP 2 909 007 B1**
(45) Veröffentlichungstag und Bekanntmachung des Hinweises auf die Patenterteilung: **30.08.2017**
(21) Anmeldenummer: 14741202.7
(22) Anmeldetag: 09.07.2014
(51) Int. Cl.: B29C 67/00, B22F 3/105, B23K 26/08, B23K 26/06, B23K 26/00, B23K 26/342, B23K 26/354

(54) **VORRICHTUNG UND VERFAHREN ZUR GENERATIVEN BAUTEILFERTIGUNG**
DEVICE AND METHOD FOR GENERATIVE COMPONENT PRODUCTION
DISPOSITIF ET PROCÉDÉ DE FABRICATION GÉNÉRATIVE DE COMPOSANTS

(30) Priorität: 11.07.2013 DE 102013011676
(43) Veröffentlichungstag der Anmeldung: 26.08.2015
(73) Patentinhaber: Fraunhofer Gesellschaft zur Förderung der angewandten Forschung E.V., 80686 München (DE)
(72) Erfinder: EIBL, Florian, 52064 Aachen (DE); HAGEDORN, Yves-Christian, 52064 Aachen (DE); JAUER, Lucas, 52134 Herzogenrath (DE); MEINERS, Wilhelm, 52072 Aachen (DE)
(74) Vertreter: Gagel, Roland
(86) Internationale Anmeldenummer: PCT/EP2014/001879
(87) Internationale Veröffentlichungsnummer: WO 2015/003804

(56) Entgegenhaltungen:
- WO-A1-00/21735
- WO-A1-2011/114296
- DE-A1- 19 853 979
- JP-A- 2009 006 509
- US-A1- 2003 214 571
- US-A1- 2013 112 672

## Beschreibung

### Technisches Anwendungsgebiet

Die vorliegende Erfindung betrifft eine Vorrichtung sowie ein Verfahren zur laserbasierten generativen Bauteilfertigung.

Ein Beispiel für ein laserbasiertes generatives Fertigungsverfahren ist das sog. selektive Laserschmelzen (SLM: Selective Laser Melting), mit dem Funktionsbauteile schichtweise hergestellt werden können. Das selektive Laserschmelzen und ähnliche generative Fertigungsverfahren bieten die Möglichkeit, Bauteile mit komplexen (internen) Geometrien herzustellen, die nicht mit konventionellen Fertigungsverfahren wie bspw. spanenden oder gießtechnischen Verfahren herstellbar sind.

Beim selektiven Laserschmelzen wird das Bauteil ausgehend von einem 3D-CAD-Modell mittels einer speziellen Software in Schichten (typ. < 100 µm) aufgeteilt. Die dabei generierten Bauteilinformationen werden der SLM-Anlage dann über standardisierte Datenformate zur Verfügung gestellt und dienen als Grundlage des Fertigungsprozesses. Als Ausgangswerkstoff dient in der Regel ein feinkörniger Pulverwerkstoff, dessen Korndicke d₅₀ vorzugsweise < 100 µm beträgt. Als Pulverwerkstoffe können bspw. Metalle, Keramiken oder Kunststoffe eingesetzt werden. Der Pulverwerkstoff wird durch eine Beschichtungseinheit in der geforderten Schichtdicke auf eine Bauplattform aufgetragen. Im Anschluss werden die digital vorliegenden Schichtinformationen des zu erzeugenden Bauteils mittels fokussierter Laserstrahlung in das erzeugte Pulverbett übertragen, indem lediglich definierte Bereiche geschmolzen und verfestigt werden. Durch ein Absenken der Bauplattform und wiederholtes Auftragen und Schmelzen des Pulvers wird ein dreidimensionales Bauteil erzeugt. In den nicht bestrahlten Bereichen verbleibt das Pulver unverdichtet und kann nach Beendigung des Prozesses aufbereitet und wieder verwendet werden.

### Stand der Technik

Ein Beispiel für eine Vorrichtung und ein Verfahren zum selektiven Laserschmelzen kann bspw. DE 196 45 865 C1 entnommen werden. Der Laserstrahl zur Belichtung der zu schmelzenden Bereiche der Pulverschichten wird bei dieser und anderen bekannten Vorrichtungen mittels eines Galvanometer-Scanners über die Bearbeitungsebene geführt. Die Fokussierung erfolgt in der Regel über eine F-Theta Linse nach dem Scanner oder über eine sog. Vario-Optik vor dem Scanner. Bisherige Anlagen verfügen typischerweise über eine maximale Laserleistung von 400 W und Bauraumgrößen in x- und y-Richtung von 250 mm x 250 mm. Für eine breite industrielle Nutzung eines derartigen Fertigungsverfahrens sind jedoch in erster Linie höhere Aufbauraten, geringere Nebenzeiten und größere Bauräume erforderlich.

Höhere Aufbauraten können prinzipiell durch Einsatz höherer Laserleistungen erzielt werden. Bei Vergrößerung der Laserleistung tritt jedoch aufgrund der hohen Intensität am Bearbeitungsort Materialverdampfung mit der Folge starker Spritzer- und Rußbildung sowie Tiefschweißen ein, was zu einem instabilen Prozess und entsprechend schlechter Bauteilqualität führt. Höhere Laserleistungen können daher nur in Verbindung mit größeren Strahldurchmessern genutzt werden. Dies führt jedoch zur Verringerung der Oberflächenqualität und Detailauflösung. Deshalb wird zurzeit das sog. Hülle-Kern-Prinzip zur Nutzung höherer Laserleistung eingesetzt. Hierbei wird die Bauteilhülle mit geringer Laserleistung (maximal 400 W) und kleinem Strahldurchmesser (ca. 100 µm) zur Erzielung der geforderten Oberflächenqualität und Detailauflösung bearbeitet. Der Bauteilkern wird mit größerem Strahldurchmesser (ca. 700 µm) und höherer Laserleistung (1 kW) zur Erzielung höherer Aufbauraten bearbeitet. Eine höhere Aufbaurate kann mit dieser Technik jedoch nur für massive Bauteile mit signifikantem Kernvolumen erzielt werden. Außerdem erfordert diese Technik, dass zur Skalierung des Prozesses hinsichtlich höherer Laserleistung jeweils für jede neue Leistungsklasse und jeden neuen Strahldurchmesser für jeden Werkstoff die Verfahrensparameter neu erarbeitet werden müssen. Bei Nutzung höherer Laserleistungen können auch die dazu erforderlichen hohen Scan-Geschwindigkeiten von > 2 m/s aufgrund der Trägheit der Scannerspiegel nicht mehr konstant erreicht werden. Weiterhin ist die Intensität der Laserstrahlung auf den verwendeten optischen Komponenten bei Verwendung von 1 kW Single-Mode Lasern nahe an den vom Hersteller angegebenen Zerstörschwellen. Dies wirkt sich in einer deutlichen thermischen Verschiebung der Fokuslage in der Größe der Rayleighlänge aus.

Eine Vergrößerung des Bauraums erfordert bei den bisher bekannten Anlagen eine Vergrößerung des Scanfeldes. Das Scanfeld der eingesetzten Scanner ist jedoch grundsätzlich begrenzt durch den maximalen Drehwinkel der Spiegel sowie über die Brennweite der verwendeten Fokussierlinse. Vergrößerte Bauräume können dabei nur mit einem verfahrbaren Scanner oder mit mehreren nebeneinander angeordneten Scannern über mehrere Scanfelder abgedeckt werden. Dies erfordert jedoch die Entwicklung neuer Scanstrategien zum defektfreien Aufbau von Bauteilen im Überlappbereich der einzelnen Scanfelder und bedeutet einen signifikant höheren Kostenanteil für optische Komponenten bei größeren Bauräumen.

Sowohl die Erhöhung der Laserleistung als auch die Vervielfachung des optischen Systems zur Vergrößerung der Bauräume verfolgen den Ansatz, die Herstellungszeit von SLM-Bauteilen zu verkleinern, indem die effektive Belichtungszeit und damit die Hauptzeit des Prozesses reduziert wird. Dabei bleibt jedoch die Nebenzeit konstant, welche im Wesentlichen der Summe der Dauer der einzelnen Pulveraufträge entspricht. Diese Nebenzeit skaliert beim konventionellen selektiven Laserschmelzen mit der Anzahl der Schichten und der Abmessung des Bauraumes in Pulverauftragsrichtung und kann nicht für die Belichtung benutzt werden.

Die US 2003/0214571 A1 beschreibt eine Vorrichtung zur generativen Bauteilfertigung, bei der über einen Bearbeitungskopf mehrere voneinander getrennte Laserstrahlen nebeneinander auf eine Bearbeitungsebene gerichtet werden. Über eine Bewegungseinrichtung ist eine Relativbewegung zwischen Bearbeitungskopf und Bearbeitungsebene in zueinander parallelen Ebenen erzeugbar. Die voneinander getrennten Laserstrahlen werden bei dieser Vorrichtung über eine Steuereinrichtung und eine Modulationseinrichtung unabhängig voneinander in Abhängigkeit von der vorgegebenen Bauteilgeometrie in der Intensität moduliert.

Die Aufgabe der vorliegenden Erfindung besteht darin, eine Vorrichtung sowie ein Verfahren zur laserbasierten generativen Bauteilfertigung anzugeben, die eine verbesserte Skalierbarkeit des Bearbeitungsprozesses hinsichtlich Laserleistung und Bauraumgröße mit geringeren Kosten als bei den bisher bekannten Lösungen ermöglicht.

### Darstellung der Erfindung

Die Aufgabe wird mit der Vorrichtung und dem Verfahren gemäß den Patentansprüchen 1 und 12 gelöst. Vorteilhafte Ausgestaltungen der Vorrichtung sowie des Verfahrens sind Gegenstand der abhängigen Patentansprüche oder lassen sich der nachfolgenden Beschreibung sowie den Ausführungsbeispielen entnehmen.

Mit der vorgeschlagenen Vorrichtung erfolgt die Bearbeitung bzw. Belichtung des Werkstoffes nicht mehr mittels eines einzelnen fokussierten Laserstrahls, sondern mittels mehrerer, unabhängig voneinander in der Intensität modulierbarer Laserstrahlen, die mit dem Bearbeitungskopf auf die Bearbeitungsebene gerichtet, vorzugsweise in die Bearbeitungsebene fokussiert werden. Unter der Fokussierung wird hierbei eine Verringerung des Strahlquerschnitts des Laserstrahls verstanden, wobei der Strahlfokus, d.h. der kleinste Strahlquerschnitt, in oder auch außerhalb der Bearbeitungsebene liegen kann. Durch Bewegung des Bearbeitungskopfes über die Bearbeitungsebene - oder der Bearbeitungsebene relativ zum Bearbeitungskopf - mit Hilfe der Bewegungseinrichtung werden die Laserstrahlen gemeinsam über die Bearbeitungsebene bewegt. Durch entsprechende Modulation der Leistung bei konstantem Fokusdurchmesser und einer sich daraus ergebenden Modulation der Intensität der einzelnen Laserstrahlen während dieser Belichtungsbewegung, insbesondere durch An- und Abschalten der jeweiligen Laserstrahlen, werden die Abmessungen des in der Bearbeitungsebene entstehenden Schmelzbades so beeinflusst, dass die belichteten Werkstoffbereiche nach ihrer Erstarrung der Geometrie des zu erzeugenden Bauteilbereiches entsprechen.

Vorzugsweise werden die einzelnen Laserstrahlen durch den Bearbeitungskopf so auf die Bearbeitungsebene gerichtet, dass insgesamt eine lang gestreckte Intensitätsverteilung in der Bearbeitungsebene erhalten wird. Gemäß der Erfindung wird mit dem Bearbeitungskopf eine zusammenhängende Intensitätsverteilung aus den Laserstrahlen erzeugt, wenn alle Laserstrahlen über die Steuereinrichtung zugeschaltet sind. Diese zusammenhängende Intensitätsverteilung wird vorzugsweise in Form einer Laserlinie realisiert, die mittels der Bewegungseinrichtung durch Verfahren des Bearbeitungskopfes in Richtung senkrecht zur Laserlinie über die Bearbeitungsebene bewegt wird. Unter einer zusammenhängenden Intensitätsverteilung wird dabei verstanden, dass die Intensität innerhalb des belichteten Bereichs nicht unter 10% der Maimalintensität in diesem Bereich abfällt. Die Bewegungseinrichtung weist dabei vorzugsweise eine oder zwei senkrecht zueinander verlaufende Translationsachsen auf, die bspw. als Linearachsen realisiert sein können und eine entsprechende Bewegung des Bearbeitungskopfes parallel zur Bearbeitungsebene ermöglichen. Der Bearbeitungskopf kann alternativ auch über andere Bewegungseinrichtungen, bspw. mit Hilfe eines Roboterarms, über die Bearbeitungsebene bewegt werden. Weiterhin kann statt des Bearbeitungskopfes auch die Bearbeitungsebene entsprechend unter dem Bearbeitungskopf bewegt werden.

Das Belichtungskonzept der vorgeschlagenen Vorrichtung basiert somit auf dem Prinzip eines Druckkopfes, mit dem durch mehrere nebeneinander liegende Laserstrahlen eine gegenüber einem einzelnen Laserstrahl vergrößerte Fläche in der Bearbeitungsebene beaufschlagt wird. Die einzelnen Laserstrahlen werden dabei während der Bewegung des Bearbeitungs- bzw. Druckkopfes entsprechend der gewünschten Belichtungsgeometrie dynamisch in der Intensität bzw. Leistung moduliert, insbesondere entsprechend an- und abgeschaltet.

Durch diesen Aufbau der Vorrichtung lässt sich die für den Bearbeitungsprozess eingesetzte Laserleistung nahezu beliebig zur Erhöhung der Aufbaurate skalieren. Die Erhöhung der Laserleistung erfolgt hierbei durch Erhöhung der Anzahl der gleichzeitig eingesetzten Laserstrahlen und damit durch Vergrößerung, insbesondere Verbreiterung, der mit dem Bearbeitungskopf in der Bearbeitungsebene erzeugten Intensitätsverteilung. Eine Erhöhung der Anzahl der Laserstrahlen ist mit einer entsprechenden Vergrößerung des Bearbeitungskopfes verbunden. Die Erhöhung der Aufbaurate kann auch erreicht werden, indem mehrere Bearbeitungsköpfe nebeneinander gesetzt werden. In beiden Fällen wird die Gesamt-Laserleistung erhöht, ohne die Leistung und damit Intensität eines einzelnen von einem Laserstrahl in der Bearbeitungsebene erzeugten Laserflecks (Laser-Spot) zu erhöhen. Dadurch kann die Aufbaurate für jeden Werkstoff linear mit der installierten Laserleistung erhöht werden, ohne die Verfahrensparameter jeweils neu erarbeiten zu müssen. Durch Verzicht auf Scannersysteme mit beweglichen Spiegeln kann jede beliebige Bauraumform (z. B. quadratisch, rechteckig) mit beliebigen Abmessungen ohne Anpassung des optischen Systems oder Mehraufwand für aufwändige optische Komponenten abgedeckt werden. Die Anpassung an die Bauraumgröße erfolgt lediglich durch Anpassung der Verfahrwege der Bewegungseinrichtung, bspw. der Linearachsen einer mit Linearachsen arbeitenden Einrichtung, und/oder durch Erhöhung der Anzahl der Laserstrahlen und entsprechende Vergrößerung des Bearbeitungskopfes. Dabei kann die mit dem Bearbeitungskopf erzeugte Intensitätsverteilung, vorzugsweise eine linienförmige Intensitätsverteilung, auch über die gesamte Breite des Bauraums erzeugt werden, so dass bspw. im Falle des selektiven Laserschmelzens die Belichtung der Pulverschicht durch Verfahren des Bearbeitungskopfes entlang der Längsachse des Bauraums mit nur einer Translationsachse erfolgen kann. Auch bei einer Intensitätsverteilung, die sich nicht über die gesamte Breite des Bauraums erstreckt, besteht die Möglichkeit, den Bearbeitungskopf nur in einer Richtung über den Bauraum zu bewegen. Die Bewegung der Intensitätsverteilung in der dazu senkrechten Richtung kann dann über eine am Bearbeitungskopf angeordnete Scannereinrichtung, insbesondere eine bewegliche Strahlablenkeinheit (bspw. einen Scannerspiegel) erfolgen, die die Intensitätsverteilung in dieser Richtung über den Bauraum führt.

Bei Nutzung der vorgeschlagenen Vorrichtung für pulverbasierte Fertigungsverfahren wie das selektive Laserschmelzen können auch die Nebenzeiten deutlich reduziert werden. Beim bisher bekannten Prinzip erfolgt nach dem Belichten einer Bauteilschicht das Auftragen einer neuen Pulverschicht mittels einer separaten Pulverauftragsvorrichtung. Während des Pulverauftrags erfolgt keine Belichtung und die Strahlquelle ist nicht produktiv. Mit der hier vorgeschlagenen Vorrichtung und dem zugehörigen Verfahren kann der Pulverauftrag simultan zur Belichtung erfolgen, indem der Bearbeitungskopf an die Achse zur Pulverbeschichtung bzw. die Pulverauftragseinrichtung gekoppelt wird. Der Bearbeitungskopf folgt dabei der Achse der Pulverauftragung in festem Abstand, so dass der Pulverauftrag simultan zur Belichtung bzw. Bearbeitung erfolgt. Die Nebenzeiten können dadurch vollständig eliminiert werden.

Im Vergleich zu den bisherigen scannerbasierten Systemen ist die Skalierung von Bauraumgröße und Laserleistung mit der vorgeschlagenen Vorrichtung und dem zugehörigen Verfahren mit signifikant geringeren Kosten für das optische System verbunden. Für die Bauraumskalierung fallen nur die Mehrkosten für entsprechend längere Linearachsen zur Bewegung des Bearbeitungskopfes an. Die Skalierung der Laserleistung durch Erhöhung der Anzahl der Strahlquellen ist ebenfalls signifikant wirtschaftlicher zu realisieren. Während beim bisherigen scannerbasierten Konzept die Strahlqualität von Single-Mode Lasern benötigt wird, um die erforderliche Fokusgröße bei möglichst großem Scanfeld (durch große Brennweiten der Fokussierlinse) zu erreichen, kann die Fokussierung bei der vorgeschlagenen Vorrichtung mit kleineren Brennweiten der Linsen erfolgen, so dass sich der Einsatz kostengünstiger Diodenlaser als Strahlquellen anbietet. Die Skalierung der Laserleistung kann linear in Einheiten eines Diodenlasers erfolgen. Zusätzliche optische Komponenten werden für die Skalierung nicht benötigt. Für bestimmte Anwendungen, bspw. für das Lasersintern von Polymeren können auch oberflächenemittierende Halbleiterlaser (VCSEL: Vertical-Cavity Surface-Emitting Laser) zur Realisierung der Intensitätsverteilung bzw. eines Spot-Feldes eingesetzt werden. Die Laseranordnung kann bei der vorgeschlagenen Vorrichtung gerade beim Einsatz von Diodenlasern grundsätzlich auch direkt im Bearbeitungskopf integriert sein.

Die vorgeschlagene Vorrichtung und das zugehörige Verfahren bieten auch die Möglichkeit, mehrere Laserlinien oder Linienspots in Bewegungsrichtung des Bearbeitungskopfes hintereinander zu erzeugen und daraus eine entsprechende Intensitätsverteilung bzw. ein Spot-Feld zu bilden. Mit dieser Intensitätsverteilung kann dann während der Überfahrt eines Bearbeitungspunkts mit den mehreren hintereinander liegenden Spots ein gezielter Temperatur-Zeitverlauf eingestellt und im Werkstoff erzeugt werden. Ein derartiger Temperatur-Zeitverlauf kann bspw. für die Bearbeitung rissanfälliger Werkstoffe eingesetzt werden, die bisher bei Bearbeitung mit einem Einzelspot aufgrund der thermisch induzierten Spannungen nicht rissfrei verarbeitet werden können.

Vorzugsweise wird bei der vorgeschlagenen Vorrichtung ein Bearbeitungskopf eingesetzt, der eine oder mehrere Fokussieroptiken, d. h. eine oder mehrere Fokussierlinsen oder Linsensysteme aufweist, durch die die Laserstrahlen in die Bearbeitungsebene fokussiert werden. Vorzugsweise weist der Bearbeitungskopf dabei für jeden der Laserstrahlen einen optischen Faseranschluss auf, der dann über eine optische Faser mit der Laseranordnung verbunden werden kann. Die Laseranordnung kann bspw. mehrere fasergekoppelte Diodenlaser zur Erzeugung der voneinander getrennten Laserstrahlen aufweisen. Es sind selbstverständlich auch andere Laserarten für die Erzeugung der Laserstrahlen möglich. Die Steuerung der Intensität bzw. Leistung in den einzelnen Laserstrahlen erfolgt dann durch Ansteuerung der entsprechenden Laser. Es besteht auch die Möglichkeit, den Laserstrahl einer einzelnen Strahlquelle in mehrere Teilstrahlen aufzuspalten, die dann über den Bearbeitungskopf auf die Bearbeitungsebene gerichtet werden. In diesem Fall ist dann jeweils ein zusätzliches Modulationselement im Strahlengang der einzelnen Laserstrahlen erforderlich, um die entsprechende Modulation zu erhalten. Eine Aufteilung eines Laserstrahls in mehrere Teilstrahlen kann auch im Bearbeitungskopf selbst erfolgen.

Bei der vorgeschlagenen Vorrichtung ist eine mit dem Bearbeitungskopf mitgeführte Einrichtung zur Schutzgaszufuhr und/oder -absaugung oberhalb der Bearbeitungsebene vorgesehen. Das Aufschmelzen des Pulverwerkstoffs beim selektiven Laserschmelzen erfolgt in einer geschlossenen Kammer, die von einem Inertgas durchströmt wird. Das Inertgas verhindert die Oxidation der Schmelze. Die Strömung bewirkt zusätzlich einen Abtransport von Emissionen (Spritzer, Ruß) aus der Wechselwirkungszone. Für eine gleiche Bauteilqualität unabhängig von der Position des Bauteils im Bauraum ist eine homogene Strömung über den gesamten Bauraum erforderlich. Dies wird bei größeren Bauräumen zunehmend aufwändiger zu realisieren. Durch die Kopplung der Einrichtung zur Schutzgaszufuhr und/oder - absaugung an den Bearbeitungskopf kann eine geeignete lokale Strömung in der Wechselwirkungszone erreicht werden. Die Einrichtung zur Schutzgaszufuhr und/oder - absaugung kann hierzu beispielsweise eine oder mehrere Düsen aufweisen und ist vorzugsweise am Bearbeitungskopf befestigt. Grundsätzlich können auch noch andere Elemente mit dem Bearbeitungskopf lokal mitgeführt werden, bspw. Systeme zur Online-Prozessüberwachung, die bei den bisher bekannten Vorrichtungen aufwändig durch koaxiale Anordnung über das optische System des Bearbeitungslasers ausgeführt werden müssen.

Bei dem vorgeschlagenen Verfahren, das mit der vorgeschlagenen Vorrichtung durchgeführt wird, wird somit aus mehreren getrennten Laserstrahlen eine lang gestreckte Intensitätsverteilung in einer Bearbeitungsebene generiert und quer zur Längserstreckung über die Bearbeitungsebene bewegt. Die einzelnen Laserstrahlen werden dabei in Abhängigkeit von der gewünschten Bearbeitung während der Bewegung unabhängig voneinander in der Intensität moduliert, insbesondere an- und abgeschaltet. Durch die gewählte Anordnung der einzelnen Laserspots, deren Durchmesser und die Modulation der Leistung wird die einwirkende Leistungsdichteverteilung räumlich und zeitlich so verändert, dass durch das sich im Werkstoff einstellende Temperaturfeld die Abmessungen des entstehenden Schmelzbades an die zu erzeugende Bauteilgeometrie angepasst werden. Im Gegensatz zum Stand der Technik wird es durch die vorgeschlagene Erfindung ermöglicht, die Abmessungen des Schmelzbades in den Dimensionen Länge, Breite und Tiefe unabhängig voneinander einzustellen und während der Bearbeitung dynamisch zu verändern.

Durch die voneinander unabhängige Modulation der Intensität der einzelnen Laserstrahlen wird die gewünschte Belichtungsgeometrie in der Bearbeitungsebene erreicht. So werden beim selektiven Laserschmelzen oder Lasersintern während der Bewegung der lang gestreckten Intensitätsverteilung über das Pulverbett jeweils nur diejenigen Punkte bzw. kleinen Bereiche durch Laser-Spots belichtet, die sich innerhalb eines Pulverbereichs befinden, der zu dem in der aktuellen Schicht herzustellen Bauteilquerschnitt gehört. Die Modulation der Intensität bzw. Leistung kann auch so durchgeführt werden, dass die Intensität in der Bearbeitungsebene anstelle des Abschaltens nur auf einen ausreichend niedrigen Wert reduziert wird, bei dem kein Aufschmelzen des Werkstoffes mehr erfolgt.

Das Verfahren lässt sich prinzipiell auch mit einer Vorrichtung durchführen, welche die aus den einzelnen Laserstrahlen gebildete Laserlinie mittels einer - beispielsweise aus beweglichen Spiegeln gebildeten - Scannereinrichtung über die Bearbeitungsebene führt. Dies reduziert zwar die bearbeitbare Bauraumgröße, hat aber dennoch den Vorteil der Erhöhung der Laserleistung und Verkürzung des Aufbauprozesses.

Die erzeugte langgesteckte Intensitätsverteilung, insbesondere Laserlinie, kann sich dabei mit ihrer Längsachse parallel zur Pulverauftragsrichtung, im Folgenden als y-Richtung bezeichnet, erstrecken und wird dann vorzugsweise mäanderförmig über das Pulverbett bewegt. Die Intensitätsverteilung kann mit ihrer Längsachse auch die gesamte Breite des Bauraums einnehmen und benötigt dann nur eine geradlinige Bewegung senkrecht zur Längsachse, d.h. eine Bewegung in y-Richtung (Pulverauftragsrichtung), über das Pulverbett. Hierbei kann über eine in Bewegungsrichtung versetzte Pulverauftragsvorrichtung der Pulverauftrag parallel zur Belichtung erfolgen. Auch bei einer geringeren Ausdehnung der Intensitätsverteilung kann ein derartiger simultaner Pulverauftrag erfolgen. Die Bewegung der Pulverauftragsvorrichtung ist dabei mit der y-Komponente der Bewegung der Intensitätsverteilung bzw. des Bearbeitungskopfes gekoppelt.

Das vorgeschlagene Verfahren lässt sich vor allem im Bereich der Pulverbett-basierten generativen Fertigungsverfahren einsetzen, beispielsweise für das selektive Laserschmelzen oder Lasersintern. Zu den Anwendungsgebieten zählen insbesondere die Produktion von Metall-, Keramik- oder Polymerbauteilen für die Luftfahrt-, Automobil- und Energieindustrie sowie die Medizintechnik und der Werkzeugbau.

### Kurze Beschreibung der Zeichnungen

Die vorgeschlagene Vorrichtung und das zugehörige Verfahren werden nachfolgend anhand von Ausführungsbeispielen in Verbindung mit den Zeichnungen nochmals näher erläutert. Hierbei zeigen:
- Fig. 1: eine schematische Darstellung eines Bearbeitungskopfes der vorgeschlagenen Vorrichtung zur Erzeugung einer Intensitätsverteilung aus mehreren Laser-Spots in einer Bearbeitungsebene;
- Fig. 2: ein Beispiel für einen Aufbau der vorgeschlagenen Vorrichtung;
- Fig. 3: eine schematische Darstellung der Belichtung einer Bauteilschicht mit der vorgeschlagenen Vorrichtung; und
- Fig. 4: ein weiteres Beispiel für einen Aufbau der vorgeschlagenen Vorrichtung.

### Wege zur Ausführung der Erfindung

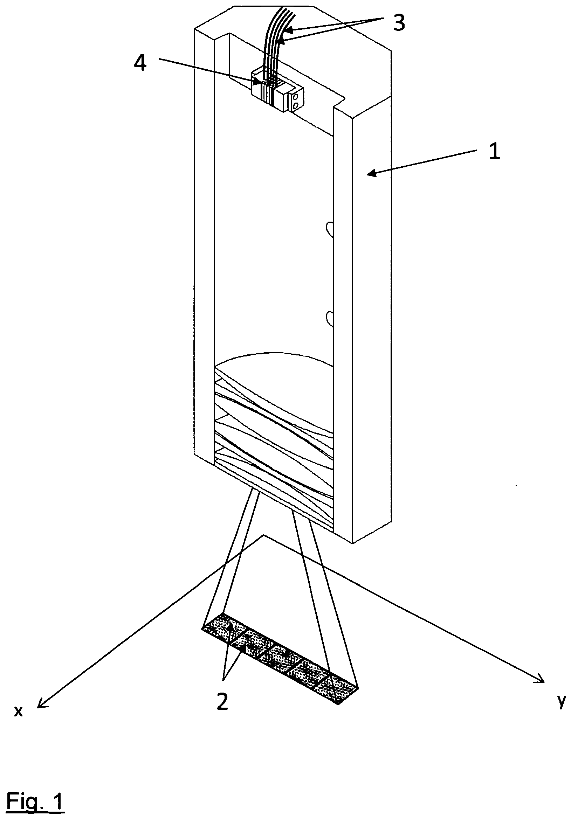

Bei der vorgeschlagenen Vorrichtung wird ein Bearbeitungskopf eingesetzt, mit dem mehrere voneinander getrennte Laserstrahlen teilweise überlappend auf eine Bearbeitungsebene gerichtet werden. Dadurch wird eine Intensitätsverteilung in der Bearbeitungsebene erzeugt, die sich aus den einzelnen Spots der Laserstrahlen zusammensetzt. Diese Spots können dabei so nebeneinander in der Bearbeitungsebene liegen, dass sich eine unterbrochene oder zusammenhängende Laserlinie ergibt. Auch ein zweidimensionales Feld der Laser-Spots kann bei Bedarf erzeugt werden. Das folgende Beispiel beschreibt in Verbindung mit den Figuren 1 bis 3 eine beispielhafte Vorrichtung mit einem Bearbeitungskopf, bei der fünf Laserstrahlen eingesetzt und mit dem Bearbeitungskopf auf die Bearbeitungsebene gerichtet werden, so dass eine Laserlinie aus den fünf nebeneinander liegenden Laser-Spots erhalten wird, die bspw. für das selektive Laserschmelzen eingesetzt werden kann. Die Belichtung des Pulverbettes erfolgt dabei nicht mehr mittels eines einzelnen fokussierten Laserstrahls, sondern mittels der Linie aus den voneinander unabhängig ansteuerbaren fokussierten Laserstrahlen, die über das Pulverbett verfahren wird.

Die Figur 1 zeigt hierzu ein Beispiel für einen Bearbeitungskopf 1, mit dem fünf eine Laserlinie bildende Laser-Spots 2 in der Bearbeitungsebene erzeugt werden. Die Laser-Spots 2 werden hierbei jeweils aus fasergekoppelten Diodenlasern 5 gebildet, deren Strahlung über die optischen Fasern 3 zu optischen Fokussierelementen 4 im Bearbeitungskopf 1 geführt und mit diesen Fokussierelementen 4 auf die Bearbeitungsebene fokussiert wird. Die Bearbeitungsebene entspricht im Falle des selektiven Laserschmelzens der Oberfläche des Pulverbetts. Im vorliegenden Beispiel wird der Bearbeitungskopf 1 mittels Linearachsen in x- und y-Richtung zeilenweise über die Bearbeitungsebene verfahren.

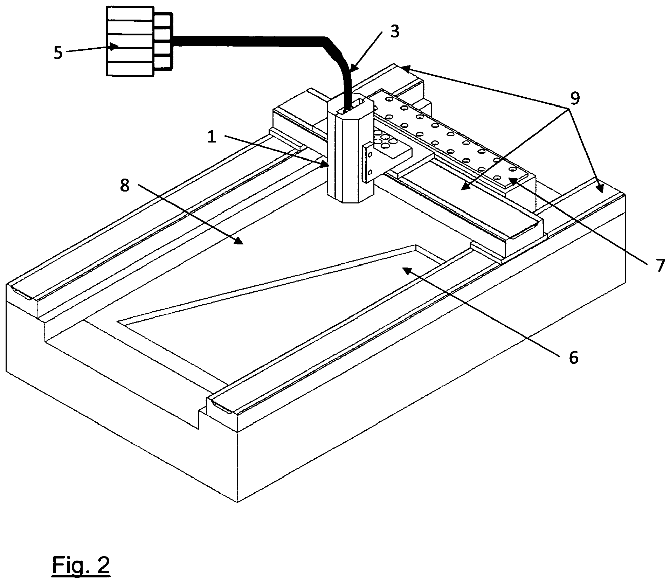

Figur 2 zeigt hierzu ein Beispiel für die Vorrichtung mit den entsprechenden fasergekoppelten Diodenlasern 5, die über die optischen Fasern 3 mit dem Bearbeitungskopf 1 verbunden sind. Die in der Figur 2 dargestellte Vorrichtung umfasst eine in der Höhe verfahrbare Bauplattform 6 in einem Aufbaubehältnis, auf der das Bauteil aufgebaut wird. Über eine Pulverauftragsvorrichtung 7, beispielsweise ein Schieber, wird jeweils eine neue Pulverschicht aus einem Pulvervorrat über der Bauplattform verteilt, wie dies aus den bekannten Vorrichtungen des Standes der Technik bekannt ist. Die Figur zeigt auch die drei Linearachsen 9, über die der Bearbeitungskopf 1 in x- und y-Richtung über den Teil des Pulverbetts 8 verfahrbar ist, der über der Bauplattform liegt. Die Bewegungsrichtungen sind in der Figur mit Doppelpfeilen angedeutet. Im vorliegenden Beispiel ist die Pulverauftragsvorrichtung 7 mit der Linearachse zur Bewegung in y-Richtung fest gekoppelt.

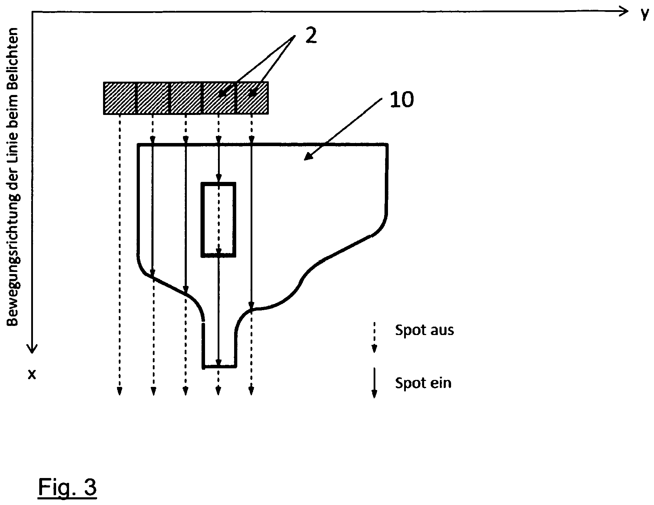

Die Steuerung zur Belichtung der zu schmelzenden Bereiche erfolgt bei der vorgeschlagenen Vorrichtung analog zu einem Druckertreiber, d. h. jeder einzelne Laser-Spot wird beim Überfahren eines zu schmelzenden Bereiches der Pulverschicht eingeschaltet und bei nicht zum Bauteil gehörenden Bereichen ausgeschaltet. Dies ist anhand der Darstellung der Figur 3 schematisch dargestellt, die die Laserlinie aus den fünf Laser-Spots 2 sowie die zu belichtende Bauteilschicht 10 zeigt. Die Linie mit den Laser-Spots 2 wird in diesem Beispiel in x-Richtung über die Bearbeitungsebene bzw. das Pulverbett bewegt. Die durchgezogenen Pfeile zeigen die Bereiche an, in denen der entsprechende Laser-Spot angeschaltet ist, die gestrichelten Linien die Bereiche, in denen der entsprechende Laser-Spot abgeschaltet ist.

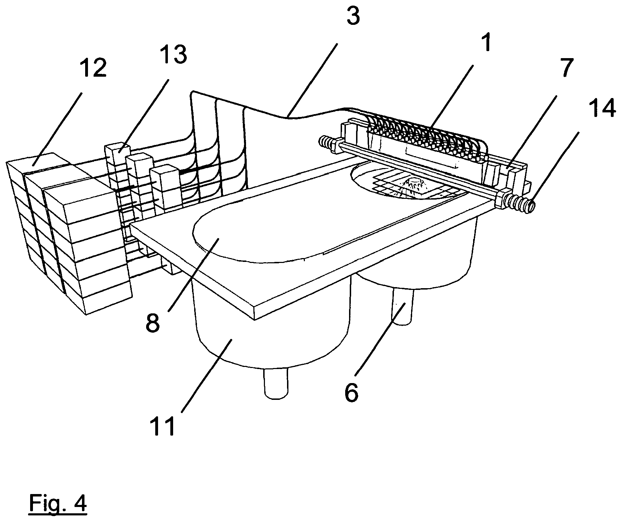

Figur 4 zeigt ein weiteres Beispiel für eine Ausgestaltung der vorgeschlagenen Vorrichtung, bei dem neben dem Aufbaubehältnis mit der Bauplattform 6 auch das Pulvervorratsvolumen 11 zu erkennen ist. In diesem Beispiel besteht die Laseranordnung aus mehreren Laserstrahlquellen 12, in deren Strahlengang entsprechende Modulationseinrichtungen 13 angeordnet sind. Der Bearbeitungskopf 1 erstreckt sich hierbei über die gesamte Breite des Bauraums. An den Bearbeitungskopf 1 ist die Absaugvorrichtung 14 gekoppelt, die entsprechend Schutzgas zuströmt sowie eventuelle Spritzer und Ruß aus der Wechselwirkungszone absaugt. Bei dieser Ausgestaltung kann gleichzeitig mit der Bewegung des Bearbeitungskopfes 1 in y-Richtung auch die Pulverauftragsvorrichtung 7 in gleicher Richtung mit dem Bearbeitungskopf bewegt werden, um auf diese Weise die Belichtung simultan zum Pulverauftrag zu erreichen. Dadurch wird die Nebenzeit für den Pulverauftrag vollständig eliminiert.

### Bezugszeichenliste

- 1: Bearbeitungskopf
- 2: Laser-Spots
- 3: optische Fasern
- 4: optische Fokussierelemente
- 5: fasergekoppelte Diodenlaser
- 6: Bauplattform
- 7: Pulverauftragsvorrichtung
- 8: Pulverbett
- 9: Linearachsen
- 10: zu belichtende Bauteilschicht
- 11: Pulvervorratsvolumen
- 12: Laserstrahlquellen
- 13: Modulationseinrichtungen
- 14: Absaugvorrichtung

## Patentansprüche

1. Vorrichtung zur generativen Bauteilfertigung, insbesondere zum selektiven Laserschmelzen oder Lasersintern, mit
- einem Bearbeitungskopf (1), mit dem mehrere voneinander getrennte Laserstrahlen teilweise überlappend auf eine Bearbeitungsebene gerichtet werden
- einer Laserstrahlquellenanordnung (5, 12), mit der die voneinander getrennten Laserstrahlen erzeugbar sind,
- einer Einrichtung (7) zum Bereitstellen eines Werkstoffes in der Bearbeitungsebene,
- einer Bewegungseinrichtung (9), mit der eine Relativbewegung zwischen Bearbeitungskopf (1) und Bearbeitungsebene in zueinander parallelen Ebenen erzeugbar ist, und
- einer Steuereinrichtung, mit der die Bewegungseinrichtung (9) zur Erzeugung der Relativbewegung ansteuerbar und die überlappenden Laserstrahlen unabhängig voneinander in der Intensität modulierbar sind,
wobei der Bearbeitungskopf (1)
- eine oder mehrere Fokussieroptiken (4) aufweist, durch die die Laserstrahlen in Richtung der Bearbeitungsebene fokussiert werden können, und
- die Laserstrahlen so auf die Bearbeitungsebene richtet, dass in der Bearbeitungsebene eine zusammenhängende Intensitätsverteilung aus den Laserstrahlen erhalten wird,
und wobei die Steuereinrichtung so ausgebildet ist, dass sie die Intensität der Laserstrahlen jeweils in Abhängigkeit von einer vorgegebenen Bauteilgeometrie moduliert.

2. Vorrichtung nach Anspruch 1,
**dadurch gekennzeichnet,**
**dass** der Bearbeitungskopf (1) die Laserstrahlen so auf die Bearbeitungsebene richtet, dass in der Bearbeitungsebene eine langgestreckte Intensitätsverteilung aus den Laserstrahlen erhalten wird.

3. Vorrichtung nach Anspruch 1 oder 2,
**dadurch gekennzeichnet,**
**dass** die zusammenhängende Intensitätsverteilung eine Laserlinie ist.

4. Vorrichtung nach einem der Ansprüche 1 bis 3,
**dadurch gekennzeichnet,**
**dass** die Steuereinrichtung so ausgebildet ist, dass sie die Intensität der Laserstrahlen zur Modulation an- und abschaltet.

5. Vorrichtung nach einem der Ansprüche 1 bis 4,
**dadurch gekennzeichnet,**
**dass** die Bewegungseinrichtung (9) eine Translationsachse oder zwei zueinander senkrechte Translationsachsen aufweist, über die der Bearbeitungskopf (1) in einer Ebene parallel zur Bearbeitungsebene bewegbar ist.

6. Vorrichtung nach einem der Ansprüche 1 bis 4,
**dadurch gekennzeichnet,**
**dass** die Bewegungseinrichtung (9) eine Translationsachse aufweist, über die der Bearbeitungskopf (1) in einer Richtung parallel zur Bearbeitungsebene bewegbar ist, wobei der Bearbeitungskopf (1) eine Scannereinrichtung aufweist, mit der die Laserstrahlen in der dazu senkrechten Richtung über die Bearbeitungsebene geführt werden können.

7. Vorrichtung nach einem der Ansprüche 1 bis 4,
**dadurch gekennzeichnet,**
**dass** ein Bauraum für die Bauteilfertigung mit einer Länge und einer Breite vorhanden ist, die Bewegungseinrichtung (9) eine Translationsachse aufweist, über die der Bearbeitungskopf (1) in einer Ebene parallel zur Bearbeitungsebene über die Länge des Bauraums bewegbar ist, und der Bearbeitungskopf (1) sich über die gesamte Breite des Bauraums erstreckt.

8. Vorrichtung nach einem der Ansprüche 1 bis 7,
**dadurch gekennzeichnet,**
**dass** der Bearbeitungskopf (1) für jeden der Laserstrahlen einen optischen Faseranschluss aufweist, der über eine optische Faser (3) mit der Laserstrahlquellenanordnung (5, 12) verbindbar ist.

9. Vorrichtung nach einem der Ansprüche 1 bis 8,
**dadurch gekennzeichnet,**
**dass** die Einrichtung (7) zum Bereitstellen eines Werkstoffes in der Bearbeitungsebene mit dem Bearbeitungskopf (1) gekoppelt ist, so dass sich die Einrichtung (7) zum Bereitstellen eines Werkstoffes in der Bearbeitungsebene simultan mit der Bewegungskomponente in einer Bewegungsrichtung des Bearbeitungskopfes (1) bewegt.

10. Vorrichtung nach einem der Ansprüche 1 bis 9,
**dadurch gekennzeichnet,**
**dass** die Laserstrahlquellenanordnung (5, 12) mehrere fasergekoppelte Diodenlaser (5) zur Erzeugung der voneinander getrennten Laserstrahlen aufweist.

11. Vorrichtung nach einem der Ansprüche 1 bis 10,
**dadurch gekennzeichnet,**
**dass** eine Einrichtung für eine Gaszufuhr und/oder Gasabsaugung (14) mit dem Bearbeitungskopf (1) gekoppelt oder am Bearbeitungskopf (1) befestigt ist und sich somit simultan mit diesem bewegt.

12. Verfahren zur generativen Bauteilfertigung mit einer Vorrichtung nach einem der vorangehenden Ansprüche, bei dem ein pulverförmiger Werkstoff für das Bauteil schichtweise durch Bestrahlung mit Laserstrahlung in einer Bearbeitungsebene unter Bildung eines Schmelzbades aufgeschmolzen wird, wobei für die Bestrahlung des Werkstoffes aus Laser-Spots mehrerer getrennter Laserstrahlen, die in Richtung der Bearbeitungsebene fokussiert werden, eine langgestreckte Intensitätsverteilung in der Bearbeitungsebene generiert und über die Bearbeitungsebene bewegt wird, und wobei die einzelnen Laserstrahlen während der Bewegung so in der Intensität moduliert, insbesondere an- und abgeschaltet werden, dass das in der Bearbeitungsebene entstehende Schmelzbad in seinen Abmessungen an die Geometrie des jeweils zu erzeugenden Bauteilbereichs angepasst wird.

13. Verfahren nach Anspruch 12,
**dadurch gekennzeichnet,**
**dass** die langgestreckte Intensitätsverteilung über die gesamte Breite eines für die Fertigung des Bauteils genutzten Bauraums erzeugt wird.

## Claims

1. A device for generative component production, particularly for selective laser melting or laser sintering, with
- a processing head (1), using which a plurality of mutually separate laser beams are directed overlapping to some extent onto a processing plane,
- a laser beam source arrangement (5, 12), using which the mutually separate laser beams can be generated,
- an apparatus (7) for providing a material in the processing plane,
- a movement apparatus (9), using which a relative movement between processing head (1) and processing plane can be generated in mutually parallel planes, and
- a control apparatus, using which the movement apparatus (9) for generating the relative movement can be controlled and the overlapping laser beams can be modulated independently of one another in terms of intensity,
wherein the processing head (1)
- has one or a plurality of focussing optical systems (4), through which the laser beams can be focussed in the direction of the processing plane, and
- directs the laser beams onto the processing plane in such a manner that a continuous intensity distribution is obtained from the laser beams in the processing plane,
and wherein the control apparatus is constructed in such a manner that it modulates the intensity of the laser beams as a function of a predetermined component geometry in each case.

2. The device according to Claim 1,
**characterised**
**in that** the processing head (1) directs the laser beams onto the processing plane in such a manner that an elongated intensity distribution is obtained from the laser beams in the processing plane.

3. The device according to Claim 1 or 2,
**characterised**
**in that** the continuous intensity distribution is a laser line.

4. The device according to one of Claims 1 to 3,
**characterised**
**in that** the control apparatus is constructed in such a manner that it switches the intensity of the laser beams for modulation on and off.

5. The device according to one of Claims 1 to 4,
**characterised**
**in that** the movement apparatus (9) has a translation axis or two mutually perpendicular translation axes, via which the processing head (1) can be moved in a plane parallel to the processing plane.

6. The device according to one of Claims 1 to 4,
**characterised**
**in that** the movement apparatus (9) has a translation axis, via which the processing head (1) can be moved in a direction parallel to the processing plane, wherein the processing head (1) has a scanner apparatus, using which the laser beams can be guided in the direction perpendicular thereto across the processing plane.

7. The device according to one of Claims 1 to 4,
**characterised**
**in that** an installation space with a length and a width is present for component production, the movement apparatus (9) has a translation axis, via which the processing head (1) can be moved in a plane parallel to the processing plane across the length of the installation space, and the processing head (1) extends over the entire width of the installation space.

8. The device according to one of Claims 1 to 7,
**characterised**
**in that** the processing head (1) has one optical fibre connection for each of the laser beams, which connection can then be connected to the laser beam source arrangement (5, 12) via an optical fibre (3).

9. The device according to one of Claims 1 to 8,
**characterised**
**in that** the apparatus (7) for providing a material in the processing plane is coupled to the processing head (1), so that the apparatus (7) for providing a material in the processing plane moves simultaneously with the movement component in a movement direction of the processing head (1).

10. The device according to one of Claims 1 to 9,
**characterised**
**in that** the laser beam source arrangement (5, 12) has a plurality of fibre-coupled diode lasers (5) for creating the mutually separate laser beams.

11. The device according to one of Claims 1 to 10,
**characterised**
**in that** an apparatus for gas supply and/or gas exhausting (14) is coupled to the processing head (1) or fastened on the processing head (1) and thus moves simultaneously with the same.

12. A method for generative component production using a device according to one of the preceding claims, in which a powdery material for the component is melted in layers by irradiation with laser radiation in a processing plane whilst forming a melt bath,
wherein, for the irradiation of the material, an elongated intensity distribution is generated in the processing plane from laser spots of a plurality of mutually separate laser beams, which are focussed in the direction of the processing plane, and is moved across the processing plane, and wherein the individual laser beams are modulated in terms of intensity, particularly are switched on and off, during the movement such that the melt bath created in the processing plane is adapted in terms of the dimensions thereof to the geometry of the component region to be created in each case.

13. The method according to Claim 12,
**characterised**
**in that** the elongated intensity distribution is generated over the entire width of an installation space used for the production of the component.

## Revendications

1. Dispositif de fabrication de composants de manière générative, notamment pour la fusion au laser sélective et le frittage au laser, comportant
- une tête d'usinage (1), avec laquelle plusieurs rayons lasers séparés les uns des autres sont orientés sur un plan de traitement en se superposant partiellement,
- un dispositif de source de rayon laser (5, 12), avec lequel les rayons laser séparés les uns des autres peuvent être produits,
- un dispositif (7) pour fournir un matériau dans le plan d'usinage,
- un dispositif de mouvement (9), avec lequel un mouvement relatif entre la tête d'usinage (1) et le plan de traitement peut être produit dans des plans parallèles les uns aux autres, et
- un dispositif de commande, avec lequel le dispositif de mouvement (9) peut être commandé pour produire le mouvement relatif et les rayons laser se superposant peuvent être modulés en intensité indépendamment les uns des autres,
dans lequel la tête d'usinage (1) présente
- une ou plusieurs optiques de focalisation (4), par l'intermédiaire desquelles les rayons laser peuvent être focalisés dans la direction du plan d'usinage, et
- les rayons laser sont alignés sur le plan d'usinage de telle sorte que dans le plan d'usinage une distribution d'intensité cohérente soit obtenue à partir des rayons laser,
et dans lequel le dispositif de commande est conçu de telle sorte qu'il module l'intensité des rayons laser respectivement en fonction d'une géométrie de composant prescrite.

2. Dispositif selon la revendication 1,
**caractérisé en ce que**
la tête d'usinage (1) aligne les rayons laser sur le plan d'usinage de telle sorte que dans le plan d'usinage une distribution d'intensité allongée soit obtenue à partir des rayons laser.

3. Dispositif selon la revendication 1 ou 2,
**caractérisé en ce que**
la distribution d'intensité cohérente est une ligne laser.

4. Dispositif selon une des revendication 1 à 3,
**caractérisé en ce que**
le dispositif de commande est conçu de telle sorte qu'il allume et éteigne l'intensité des rayons laser à des fins de modulation.

5. Dispositif selon une des revendication 1 à 4,
**caractérisé en ce que**
le dispositif de mouvement (9) présente un axe de translation ou deux axes de translation perpendiculaires l'un à l'autre, par l'intermédiaire desquels la tête d'usinage (1) peut être déplacée dans un plan parallèle au plan d'usinage.

6. Dispositif selon une des revendications 1 à 4,
**caractérisé en ce que**
le dispositif de mouvement (9) présente un axe de translation, par l'intermédiaire duquel la tête d'usinage (1) peut être déplacée dans une direction parallèle au plan d'usinage, dans lequel la tête d'usinage (1) présente un dispositif de scanner, avec lequel les rayons laser peuvent être guidés dans la direction qui leur est perpendiculaire au-dessus du plan d'usinage.

7. Dispositif selon une des revendications 1 à 4,
**caractérisé en ce**
**qu'**un espace de montage pour la fabrication de composants est prévu avec une longueur et une largeur, le dispositif de mouvement (9) présente un axe de translation, par l'intermédiaire duquel la tête d'usinage (1) peut être déplacée dans un plan parallèle au plan d'usinage sur la longueur de l'espace de montage, et la tête d'usinage (1) s'étend sur la largeur totale de l'espace de montage.

8. Dispositif selon une des revendications 1 à 7,
**caractérisé en ce que**
la tête d'usinage (1) présente pour chacun des rayons laser un raccord de fibre optique, qui peut être relié par l'intermédiaire d'une fibre optique (3) avec le dispositif de source de rayon laser (5, 12).

9. Dispositif selon une des revendications 1 à 8,
**caractérisé en ce que**
le dispositif (7) pour fournir un matériau dans le plan d'usinage est couplé avec la tête d'usinage (1), de sorte que le dispositif (7) pour fournir un matériau se déplace dans le plan d'usinage simultanément aux composants de mouvement dans une direction de mouvement de la tête d'usinage (1).

10. Dispositif selon une des revendications 1 à 9,
**caractérisé en ce que**
le dispositif de source de rayon laser (5, 12) présente plusieurs lasers à diode (5) couplés par fibre pour produire les rayons lasers séparés les uns des autres.

11. Dispositif selon une des revendications 1 à 10,
**caractérisé en ce**
**qu'**un dispositif pour une alimentation en gaz et/ou aspiration de gaz (14) est couplé avec la tête d'usinage (1) ou sur la tête d'usinage (1) et se déplace ainsi simultanément à celle-ci.

12. Procédé de fabrication de composants de manière générative comportant un dispositif selon une des revendications précédentes, dans lequel un matériau pulvérulent pour le composant est fondu par couches au moyen d'une irradiation avec un rayon laser dans un plan d'usinage en formant un bain de fusion, dans lequel pour l'irradiation du matériau, une distribution d'intensité allongée à partir de spots laser de plusieurs rayons laser séparés, qui sont focalisés dans la direction du plan d'usinage, est générée dans le plan d'usinage et est déplacée au-dessus du plan d'usinage, et dans lequel les rayons lasers individuels sont modulés en intensité pendant le mouvement, notamment allumés et éteints, de sorte que le bain de fusion généré dans le plan d'usinage sont adapté dans ses dimensions à la géométrie de la zone de composant respective à produire.

13. Procédé selon la revendication 12, **caractérisé en ce que** la répartition d'intensité allongée est produite sur la largeur totale d'un espace de montage utilisé pour la fabrication du composant.
